# EUROPÄISCHE PATENTSCHRIFT

(11) **EP 3 379 085 B1**
(45) Veröffentlichungstag und Bekanntmachung des Hinweises auf die Patenterteilung: **27.07.2022**
(21) Anmeldenummer: 18160843.1
(22) Anmeldetag: 09.03.2018
(51) Int. Cl.: F04D 13/06, F04D 29/02, H02K 15/16

(54) **UMSPRITZTER UND AUSGEWUCHTETER AUSSENLÄUFER-ROTOR EINER PUMPE**
ENCAPSULATED AND BALANCED OUTER ROTOR OF A PUMP
ROTOR EXTERNE DE POMPE ENCAPSULÉ ET ÉQUILIBRÉ

(30) Priorität: 23.03.2017 DE 102017204947
(43) Veröffentlichungstag der Anmeldung: 26.09.2018
(73) Patentinhaber: VOLKSWAGEN AKTIENGESELLSCHAFT, 38440 Wolfsburg (DE)
(72) Erfinder: Mojrzisch, Sebastian Kamil, 30449 Hannover (DE); Sauer, Sebastian, 38104 Braunschweig (DE); Bachmann, Stephan, 38855 Wernigerode (DE); Staudenmann, Christian, 3152 Mamishaus (CH)

(56) Entgegenhaltungen:
- EP-A2- 2 072 825
- EP-A2- 2 199 616
- GB-A- 2 513 774
- US-A- 5 501 582
- US-A- 6 007 312
- US-A1- 2007 090 704
- US-A1- 2014 227 118

## Beschreibung

Die Erfindung betrifft einen Außenläufer-Rotor einer Pumpe, eine Pumpe mit einem solchen Außenläufer-Rotor sowie ein Verfahren zur Herstellung eines Außenläufer-Rotors. Insbesondere betrifft die Erfindung Außenläufer-Rotoren zum Einsatz in elektrischen Fluidpumpen, wie Wasserpumpen, Ölpumpen, Kraftstoffpumpen oder Kühlmittelpumpen, insbesondere eingesetzt in Kraftfahrzeugen.

Aus EP 2 072 825 A2 ist eine Kühlmittelpumpe mit einer Pumpeneinheit und einer Antriebseinheit bekannt. Die Antriebseinheit umfasst einen als Außenläufer gestalteten Rotor, in welchen Permanentmagnete und ein Eisenrückschluss eingespritzt sein sollen. Eine konkrete Anordnung der Permanentmagnete und des Eisenrückschlusses innerhalb des Rotors ist nicht beschrieben.

Aus US 2007/0090704 A1 ist eine Pumpe mit einem Außenläufer-Rotor bekannt. Der Außenläufer-Rotor umfasst ein durch eine äußere Schicht und eine innere Schicht gebildetes Magnetelement, das in Magnetelemente eines als "rotating disc" bezeichneten Scheibenelement angeordnet ist.

Aus EP 2 199 616 A1 ist eine Kreiselpumpe mit einer feststehenden Achse und einem Rotor bekannt, deren Rotor einen Rotormagneten und einen Rotor-Rückschlussring aufweist, welche vollständig von Kunststoff ummantelt sind.

Aus US 6,007,312 A ist ebenfalls ein Rotor einer Pumpe bekannt, bei welchem eine Magnetzusammenbaueinheit bestehend aus einem Magnetring und einem Rückschlussring von Kunststoff umspritzt ist.

Aus US 5 501 582 A ist eine weitere Kreiselpumpe mit einem Außenläufer-Rotor bekannt.

Aus EP 2 561 232 B1 ist eine elektrische Kühlmittelpumpe mit einem, in einem Pumpengehäuse, drehbar gelagerten Rotor bekannt. Der Rotor ist zweiteilig ausgebildet und umfasst einen als Pumpenrotor bezeichneten Laufradabschnitt und einen als Motorrotor bezeichneten Antriebsabschnitt. Der Motorrotor und der Pumpenrotor sind durch Spritzguss hergestellte Kunststoff-Bauteile aus verschiedenen Materialien, wobei der Motorrotor eine ferromagnetische Substanz aufweist und mindestens zweipolig magnetisiert ist.

Aus WO 2012/096761 A1 ist eine Rotor-Zusammenbaueinheit bekannt, welche ein drehbar gelagertes Antriebselement und einen als Rotor bezeichneten Laufradabschnitt umfasst, wobei der Rotor lösbar mit dem Antriebselement verbunden ist. An der Außenseite des Antriebselements ist ein Befestigungsbereich zur Anordnung mehrerer Magnete ausgebildet, wobei die daran angeordneten Magnete außenseitig von einer Hülse umgeben sind. Die Hülse ist bevorzugt aus Edelstahl und ist mit ihrem oberen und unteren Rand gegenüber dem Befestigungsbereich der Magnete dichtend angeordnet.

Aus GB 2 513 774 A und US 2014/0227118 A1 sind jeweils Pumpen mit einem Innenläufer-Rotor bekannt. Diese Innenläufer-Rotoren weisen mehrere Magnetelemente auf, welche außenseitig nicht umschlossen sind.

Der Erfindung liegt die Aufgabe zugrunde, einen Außenläufer-Rotor einer Pumpe sowie eine Pumpe mit einem solchen Außenläufer-Rotor zur Verfügung zu stellen, welche eine lange Lebensdauer aufweisen und kostengünstig herstellbar sind. Ferner sollen Verfahren zur kostengünstigen Herstellung solcher Außenläufer-Rotoren zur Verfügung gestellt werden.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Ein erfindungsgemäßer Außenläufer-Rotor einer Pumpe umfasst einen Laufradabschnitt mit mehreren Laufradschaufeln und einen Antriebsabschnitt. Der Antriebsabschnitt ist aus einem ersten Teil und einem zweiten Teil gebildet, wobei der erste Teil des Antriebsabschnitts zusammen mit dem Laufradabschnitt hergestellt ist und der zweite Teil des Antriebsabschnittes in Form einer Schutzschicht an den ersten Teil (64) angespritzt ist. In dem Antriebsabschnitt sind mehrere Magnetelemente über den Umfang des Antriebsabschnitts verteilt derart angeordnet, dass der Antriebsabschnitt über den Umfang verteilt mindestens zweipolig magnetisiert ist. Ferner sind die Magnetelemente außenseitig von einem Rückschlusselement umgeben. Unter einem Rückschlusselement wird vorliegend insbesondere ein Magnetkreis-Rückschlusselement verstanden, welches ein oder mehrteilig aus einem ferromagnetischen Werkstoff gebildet sein kann. Die Magnetelemente sowie das Rückschlusselement sind in radialer Richtung betrachtet zwischen dem ersten Teil des Antriebsabschnittes und dem zweiten Teil des Antriebsabschnittes positioniert. Das Rückschlusselement und die

Magnetelemente sind dabei zumindest teilweise derart von der Schutzschicht, die aus einem Kunststoff besteht, umschlossen, dass die Schutzschicht sämtliche Magnetelemente und das Rückschlusselement ummantelt und sich in einer Längsschnittdarstellung eine die Magnetelemente und das Rückschlusselement vollständig umschließende Anordnung aus dem ersten Teil des Antriebsabschnittes und der Schutzschicht ergibt. Der Außenläufer-Rotor ist vorzugsweise für eine Radialpumpe vorgesehen. Er kann dazu mehrere bogenförmig gekrümmte Laufradschaufeln aufweisen, die alle in der gleichen Richtung gekrümmt und gleichmäßig über den Umfang des Antriebsabschnitts verteilt angeordnet sind. Insbesondere können die Laufradschaufeln jeweils beabstandet zueinander derart angeordnet sein, dass sich benachbarte Laufradschaufeln nicht berühren. Der Vollständigkeit halber wird darauf verwiesen, dass die Abstände zwischen zwei Laufradschaufeln und/oder die Krümmungen der einzelnen Laufradschaufeln auch unterschiedlich sein können.

Aufgrund der Ummantelung aller Magnetelemente, und der Ummantelung des Rückschlusselements mit einer Schutzschicht aus Kunststoff können die entsprechenden Bereiche gegenüber der Umgebung und darin befindlichen Medien besonders geschützt werden, insbesondere gegenüber Fluiden (d.h. Gasen und Flüssigkeiten), die sich in dieser Umgebung befinden können. Dies ist insbesondere in Verbindung mit solchen Pumpen von Vorteil, bei welchen sich ein Fluidraum bis zu dem Antriebsabschnitt erstreckt und eine langfristig wirksame Schutzschicht insoweit von besonderem Wert ist. So kann eine hohe Lebensdauer aller Magnetelemente - und des Rückschlusselements erzielt und insbesondere eine durch Kontakt mit einem Fluid bewirkte oder beschleunigte Korrosion vermieden werden. Eine Ummantelung mit einer Schutzschicht aus Kunststoff kann insbesondere einfach und kostengünstig in einer Serienproduktion mit hohen Stückzahlen umgesetzt werden.

In Verbindung mit dem erfindungsgemäßen Außenläufer-Rotor wird insbesondere auf elektrische Pumpen zur Förderung von Fluid, insbesondere Wasser, Öl, Kraftstoff oder Kühlmittel verwiesen, in welchen solche Außenläufer-Rotoren eingesetzt sind. Besonders verwiesen wird ferner auf Kühlkreisläufe von Verbrennungskraftmaschinen mit derartigen elektrischen Pumpen, insbesondere auf Kühlkreisläufe von Abgasrückführungsanlagen einer Verbrennungskraftmaschine.

In einer praktischen Ausführungsform sind der Laufradabschnitt und der Antriebsabschnitt einstückig ausgebildet. Als Werkstoff für eine derartige einstückige Herstellung eignen sich insbesondere Kunststoffe, da - insbesondere bei hohen Stückzahlen - dann die Herstellungs- und insbesondere die Materialkosten im Vergleich zu anderen Werkstoffen sehr gering gehalten werden können, beispielsweise wenn der Laufradabschnitt und der Antriebsabschnitt einstückig im Kunststoff-Spritzgussverfahren produziert werden. Ein weiterer Vorteil der einstückigen Herstellung ist, dass nach der Herstellung keine weiteren Montagearbeiten oder sonstige Nacharbeiten erforderlich sind, da mit Kunststoffen für diesen Anwendungsfall, insbesondere im Kunststoff-Spritzgussverfahren eine ausreichend hohe Maßhaltigkeit erzielt werden kann. So können die Kosten gering gehalten werden.

Sowohl aus Kostengründen als auch aufgrund der Materialeigenschaften besonders geeignet sind Schutzschichten, die aus einem thermoplastischen Kunststoff und/oder einem Elastomer gebildet sind. Somit kann die Schutzschicht erfindungsgemäß durch Anspritzen ausgebildet sein. Thermoplastische Kunststoffe oder Elastomere eignen sich dabei - nicht nur gut als gegenüber Fluid abdichtende Werkstoffe, sondern weisen darüber hinaus eine lange Lebensdauer und gute akustische Dämpfungseigenschaften auf.

Der Laufradabschnitt und der Antriebsabschnitt eines erfindungsgemäßen Außenläufer-Rotors können gemeinsam ebenfalls aus einem thermoplastischen Kunststoff und/oder aus einem Elastomer gebildet sein.

Wie im Folgenden in Verbindung mit dem Verfahren noch ausführlicher erläutert werden wird, wird die Schutzschicht erfindungsgemäß an einen ersten Teil des Antriebsabschnitts, der zusammen mit dem Laufradabschnitt einstückig hergestellt ist, angespritzt. Somit ergibt sich eine besonders einfache Herstellung und ein kompaktes und langlebiges Bauelement. Hierbei werden die Magnetelemente und das Rückschlusselement vollständig

als Einlegeteile umspritzt. In einer weiteren praktischen Ausführungsform ist das Rückschlusselement als geschlossenes Ringelement ausgebildet. Ein solches geschlossenes Ringelement ist insbesondere derart angeordnet, dass es einen direkten Kontakt zu allen Magnetelementen aufweist, insbesondere mit seiner Innenumfangsfläche, und dadurch einen sehr guten magnetischen Rückschluss erzeugt.

Als geschlossenes Ringelement kann insbesondere eine Hülse dienen, die über die mehreren Magnetelemente geschoben ist. Ein derartiges Ringelement in Form einer Hülse kann als einfaches Standardteil kostengünstig hergestellt oder als Zukaufteil bezogen werden. Die Anordnung mehrerer Magnetelemente, gleichmäßig über den Umfang verteilt, ermöglicht einen gleichmäßigeren und somit geräuschärmeren Betrieb einer Pumpe mit einem erfindungsgemäßen Außenläufer-Rotor. Für einen gleichmäßigen Antrieb des Außenläufer-Rotors sind in einer besonders praktischen Ausführungsform eine gerade Zahl von Magnetelementen über den Umfang verteilt angeordnet, wie z.B. 3 Paare, 4 Paare, 5 Paare, 6 Paare, 7 Paare oder 8 Paare unterschiedlich gepolter Magnetelemente, wobei die Magnetelemente jeweils wechselweise magnetisiert über den Umfang verteilt angeordnet sind. Dies kann derart erfolgen, dass jeweils ein positiv magnetisiertes Magnetelement und ein negativ magnetisiertes Magnetelement wechselweise angeordnet sind oder auch jeweils 2, 3 etc. Magnetelemente in einer Magnetisierungsform hintereinander und dann eine gleiche Zahl an umgekehrt magnetisierten Magnetelementen im Anschluss angeordnet sind.

Da mehrere Magnetelemente vorgesehen sind, können insbesondere auch ungekrümmte Magnetelemente verwendet werden, beispielsweise einfache quaderförmige Magnetelemente. Solche nicht gekrümmten, geometrisch einfach geformten Magnetelemente sind einfacher und kostengünstiger herzustellen und dementsprechend am Markt als Zukaufteile auch kostengünstiger erhältlich.

In einer weiteren praktischen Ausführungsform sind Aufnahmestrukturen zur formschlüssigen und/oder kraftschlüssigen Aufnahme des mindestens einen Magnetelements an dem Antriebsabschnitt ausgebildet oder angeordnet. Solche Aufnahmestrukturen können unter anderem in Form von Taschen oder Mulden oder axial verlaufenden Rippen ausgebildet oder angeordnet sein. Insbesondere können Aufnahmestrukturen korrespondierend zu den Magnetelementen derart ausgebildet sein, dass die Magnetelemente darin einpressbar sind und dann klemmend von den Aufnahmestrukturen gehalten werden.

Vorzugsweise sind Aufnahmestrukturen einstückig an dem Antriebsabschnitt ausgebildet, insbesondere angespritzt bzw. durch eine Kunststoff-Spritzgussform als Außenkontur vorgegeben. Mit solchen Aufnahmestrukturen wird die Anordnung und lagegenaue Fixierung der Magnetelemente an dem Antriebsabschnitt erleichtert.

Die Erfindung betrifft auch eine Pumpe (insbesondere eine Wasserpumpe oder Kühlmittelpumpe eines Kraftfahrzeuges) mit einem wie vorstehend beschriebenen Außenläufer-Rotor, wobei radial innerhalb des Antriebsabschnitts ein Stator angeordnet ist und der Stator fest mit einer den Laufradabschnitt zumindest teilweise durchsetzenden Drehachse verbunden ist. Eine solche Drehachse kann insbesondere an dem Stator angespritzt oder in diesen eingepresst oder eingeformt sein. Zur Verringerung der Reibung zwischen dem Außenläufer-Rotor bzw. dem Laufradabschnitt und der Drehachse kann ferner eine Gleitlagerbuchse aus einem reibungsreduzierenden Material zwischen der Drehachse und dem Laufradabschnitt eines Außenläufer-Rotors angeordnet sein. Die Drehachse kann an dem von dem Stator abgewandten Ende fest mit einer radial gegenüber der Drehachse herausragenden Anlaufscheibe verbunden sein, insbesondere derart, dass die Anlaufscheibe einen oberen Anschlag in axialer Richtung der Drehachse für den Außenläufer-Rotor bildet. In diesem Fall kann einer axialen Verschiebung des Außenläufer-Rotors in Richtung eines Gehäuses entgegengewirkt werden, um eine Berührung des Laufradabschnitts bzw. der Laufradschaufeln mit einem umgebenden Gehäuse zu vermeiden.

Bei der erfindungsgemäßen Pumpe kann es sich - wie bereits erwähnt - insbesondere um eine Radialpumpe handeln, bei der ein Fluid aus einer Saugleitung in Axialrichtung in den Laufradabschnitt gefördert und dann mittels der Laufradschaufeln in Radialrichtung in eine Druckleitung weitergefördert wird.

Das Gehäuse einer erfindungsgemäßen Pumpe kann einteilig, zweiteilig oder mehrteilig aufgebaut sein. In einer besonders bevorzugten Ausführungsform ist das Gehäuse zweiteilig oder mehrteilig ausgebildet und begrenzt einen, den Außenläufer-Rotor zumindest teilweise umgebenden Fluidraum, der fluidal mit dem Laufradabschnitt verbunden ist. Mittels der Schutzschicht an dem Antriebsabschnitt kann bei dem erfindungsgemäßen Außenläufer-Rotor verhindert werden, dass Fluid aus dem Fluidraum in Kontakt mit dem einen Magnetelement oder den mehreren Magnetelementen gerät und so Korrosion zulassen bzw. beschleunigen kann.

Als Antrieb für einen erfindungsgemäßen Außenläufer-Rotor ist insbesondere ein in dem Stator angeordneter Elektromagnet (oder mehrere Elektromagnete) vorgesehen, welche mit den Magnetelementen in dem Außenläufer-Rotor zusammenwirken und den Außenläufer-Rotor in bekannter Art und Weise antreiben.

Die Erfindung betrifft auch ein Verfahren zur Herstellung eines wie vorstehend beschriebenen Außenläufer-Rotors, wobei in einem ersten Verfahrensschritt der erste Teil des Antriebsabschnittes hergestellt wird, dann die Magnetelemente sowie das Rückschlusselement gegenüber dem ersten Teil des Antriebsabschnittes positioniert werden und in einem letzten Schritt der zweite Teil des Antriebsabschnittes durch Anspritzen an den ersten Teil des Antriebsabschnittes derart gebildet wird, dass die Magnetelemente und das Rückschlusselement vollständig von dem ersten Teil und dem zweiten Teil des Antriebsabschnittes umschlossen sind.

Es kann zunächst als erster Teil ein Innenelement des Antriebsabschnittes hergestellt werden, an dessen Außen-Umfangsfläche die Magnetelemente anordenbar sind. Auf die bereits beschriebenen, vorteilhaften Aufnahmestrukturen zur Positionierung der Magnetelemente an dem Antriebsabschnitt wird hiermit noch einmal verwiesen.

Der Vollständigkeit halber wird noch darauf hingewiesen, dass die Magnetelemente alternativ auch an dem Rückschlusselement positioniert werden können, beispielsweise indem die Magnetelemente an diesem formschlüssig, stoffschlüssig der kraftschlüssig festgelegt werden. Ein Vorteil beider Verfahren ist es, dass in der Praxis der Außenläufer-Rotor vor der Herstellung der Schutzschicht ausgewuchtet werden kann, indem eine geeignete, massewirksame Bearbeitung des Rückschlusselements durchgeführt wird. Insbesondere kann das Auswuchten durch spanende Bearbeitung oder das Aufbringen von einer oder mehreren Zusatzmassen realisiert werden. So kann ein Außenläufer-Rotor mit einem besonders gleichmäßigen Rundlauf erzeugt werden, in welchem Unwuchten vollständig oder zumindest weitestgehend eliminiert sind.

In Verbindung mit dem Auswuchten wird noch darauf hingewiesen, dass an dem Rückschlusselement oder einem anderen Element des Außenläufer-Rotors eine Nulllinie aufgebracht werden kann, um die Position einer notwendigen spanenden Bearbeitung auf dem Rückschlusselement angeben und definieren zu können. Bei der Ermittlung einer Unwucht kann dann auf dem Rückschlusselement oder einem anderen Element unmittelbar eine Kennung aufgebracht werden, um an dem Bauteil selbst anzugeben, an welcher Position und in welchem Umfang eine Bearbeitung zur Beseitigung einer Unwucht erfolgen soll. Eine solche Kennung kann insbesondere in Form eines Data-Matrixcodes (Lasermarkierung) aufgebracht werden.

Weitere praktische Ausführungsformen der Erfindung sind nachfolgend im Zusammenhang mit den Zeichnungen beschrieben. Es zeigen:
- Fig. 1: eine erfindungsgemäße Pumpe mit einer ersten Ausführungsform eines Außenläufer-Rotors in einem Längsschnitt,
- Fig. 2: die erste Ausführungsform des erfindungsgemäßen Außenläufer-Rotors ohne Schutzschicht in einer Explosionsdarstellung in einer perspektivischen Ansicht,
- Fig. 3: die erste Ausführungsform des erfindungsgemäßen Außenläufer-Rotors gemäß Fig. 2 ohne Schutzschicht in einer teilweise geschnittenen Darstellung in einer perspektivischen Ansicht,
- Fig. 4: die erste Ausführungsform des erfindungsgemäßen Außenläufer-Rotors gemäß den Fig. 2 und 3 mit Schutzschicht in einer perspektivischen Ansicht und
- Fig. 5: eine zweite Ausführungsform eines erfindungsgemäßen Außenläufer-Rotors in einer Explosionsdarstellung in einer perspektivischen Ansicht.

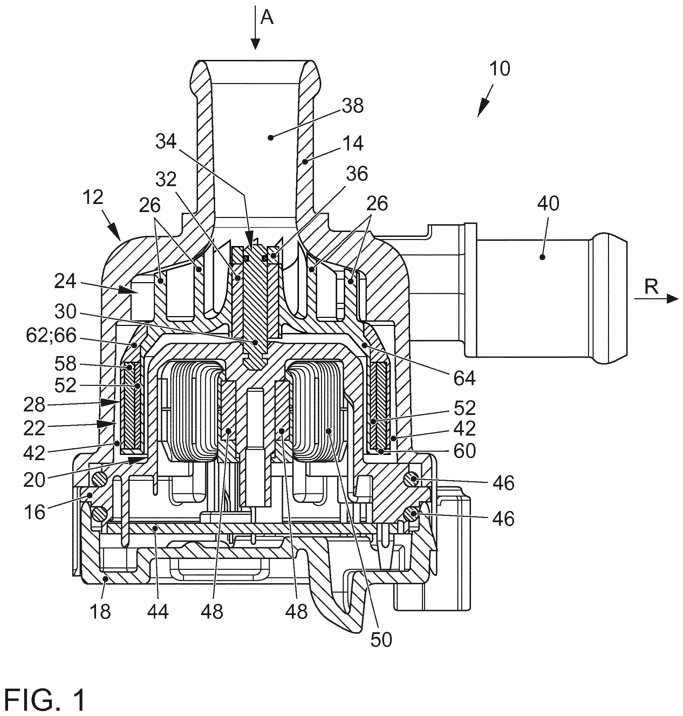

In Fig. 1 ist eine Pumpe 10 dargestellt. Dabei handelt es sich um eine Radialpumpe. Diese fördert über eine Zuleitung 38 in axialer Richtung A einströmendes Fluid (hier: Wasser) mittels eines rotierenden Außenläufer-Rotors 22 in radialer Richtung R in eine Förderleitung 40.

Die Pumpe 10 umfasst ein dreiteiliges Gehäuse 12 mit einem Gehäuseoberteil 14, einem Gehäuseunterteil 16 und einem Gehäusedeckel 18. In dem Gehäuse 12 sind ein Stator 20 und der Außenläufer-Rotor 22 angeordnet. Der Außenläufer-Rotor 22 umfasst einen Laufradabschnitt 24 mit mehreren Laufradschaufeln 26 und einen Antriebsabschnitt 28. Die Laufradschaufeln 26 sind in dem gezeigten Ausführungsbeispiel so angeordnet, dass sich diese von einer Außenseite in radialer Richtung und in Umfangrichtung nach innen erstrecken, sich aber weder innenseitig noch außenseitig berühren.

Wie aus Fig. 1 ersichtlich, umfasst der Stator 20 unter anderem eine Platine 44 sowie damit verbundene Elektronik (nicht im Detail dargestellt), einen Eisenkern 48 und eine Spule 50. Dabei sind der Eisenkern 48 und die Spule 50 radial innerhalb des Antriebsabschnittes 28 des Außenläufer-Rotors 22 angeordnet. Der Stator 20 ist zwischen dem Gehäuseunterteil 16 und dem Gehäusedeckel 18 angeordnet. Dabei ist das Gehäuseunterteil 16 fest mit einer hier als separates Element ausgebildeten, den Außenläufer-Rotor 22 durchsetzenden Drehachse 30 verbunden. Die Drehachse 30 ist vorliegend durch Umspritzen fest mit dem Gehäuseunterteil 16 verbunden. An dem oberen Ende der Drehachse 30 ist eine Anlaufscheibe 36 fest mit der Drehachse 30 verbunden. Die Anlaufscheibe 36 bildet einen oberen axialen Anschlag für den Außenläufer-Rotor 22, so dass die Laufradschaufeln 26 nicht mit dem Gehäuse 12 in Kontakt gelangen können.

Zur drehbaren Lagerung des Außenläufer-Rotors 22 um die Drehachse 30 weist der Außenläufer-Rotor 22 eine Durchgangsöffnung 34 auf. In diese Durchgangsöffnung 34 ist eine Gleitlagerbuchse 32 aus einem reibungsreduzierenden Material eingebracht, um die Reibung zwischen der Drehachse 30 und dem Laufradabschnitt 24 des Außenläufer-Rotors 22 zu verringern. Die Gleitlagerbuchse 32 kann insbesondere aus einem Polyphenylensulfid (PPS) hergestellt sein, vorzugsweise aus PPS CF 30.

Zwischen dem Gehäuseoberteil 14 und dem Gehäuseunterteil 16 ist ein Fluidraum 42 gebildet, welcher sich von dem Laufradabschnitt 24 bis zu dem Antriebsabschnitt 28 des Außenläufer-Rotors 22 erstreckt. In den Bereich zwischen dem Gehäuseunterteil 16 und dem Gehäusedeckel 18 hingegen gelangt kein Fluid, so dass die Platine 44 und die übrige Elektronik vor Fluideinwirkung geschützt sind. Zur Abdichtung der Bereiche gegeneinander und gegenüber der Umgebung ist jeweils eine Dichtung 46 zwischen dem Gehäuseoberteil 14 und dem Gehäuseunterteil 16 sowie zwischen dem Gehäuseunterteil 16 und dem Gehäusedeckel 18 angeordnet.

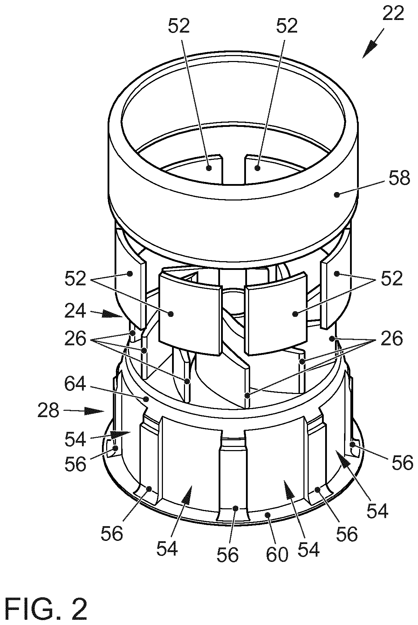

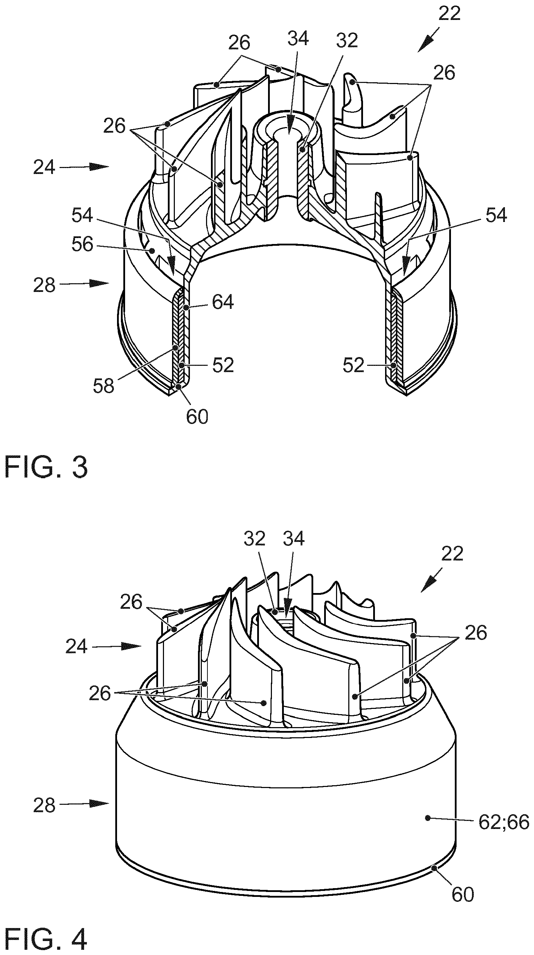

In Zusammenhang mit den Fig. 2 bis 4 wird im Folgenden der Aufbau der ersten Ausführungsform des erfindungsgemäßen Außenläufer-Rotors 22 im Detail erläutert. Wie insbesondere auch aus den Fig. 2 und 3 gut ersichtlich ist, sind der Laufradabschnitt 24 und der Antriebsabschnitt 28 in dieser Ausführungsform einstückig ausgebildet.

In Fig. 2 sind gut der Laufradabschnitt 24 mit den Laufradschaufeln 26 und dem einteilig mit dem Laufradabschnitt 24 ausgebildeten Antriebsabschnitt 28 zu erkennen. Der Laufradabschnitt 24 und der Antriebsabschnitt 28 sind in dieser Ausführungsform aus Kunststoff ausgebildet. An dem Antriebsabschnitt 28 sind Aufnahmestrukturen 54 zum Einsetzen von Magnetelementen 52 durch axial verlaufende Stege 56 ausgebildet. Der Abstand der Stege 56 zueinander ist so ausgelegt, dass die Magnetelemente 52 klemmend zwischen den Stegen 56 einsetzbar sind und in dieser Position fixiert werden. In dieser Ausführungsform sind acht Aufnahmestrukturen 54 gleichmäßig über den Umfang des Antriebsabschnitts 28 verteilt ausgebildet. In diese Aufnahmestrukturen 54 werden Magnetelemente 52 mit jeweils unterschiedlicher Ausrichtung von Nordpol und Südpol (nicht dargestellt) eingesetzt, so dass sich in bekannter Art und Weise über den Umfang eine alternierende Anordnung von positiven und negativen Polen ergibt.

Radial außenseitig der Magnetelemente 52 ist ein Rückschlusselement 58 aus einem ferromagnetischen Werkstoff angeordnet. Das Rückschlusselement 58 ist in der gezeigten Ausführungsform als geschlossenes Ringelement in Form einer Hülse ausgebildet. Es wird bei der Montage so über die Magnetelemente 52 geschoben werden, dass die Außenseite der Magnetelemente 52 mit der Innenseite des Rückschlusselements 58 in direktem Kontakt steht. Diese Anordnung ist in Fig. 3 gut zu erkennen.

Wie aus einer Zusammenschau der Fig. 2 und 3 gut ersichtlich ist, weist der Antriebsabschnitt 28 an der unteren, dem Stator 20 zugewandten Seite einen umlaufenden in radialer Richtung hervorragenden Kragen 60 auf, der die Magnetelemente 52 und das Rückschlusselement 58 von unten umgibt. Dieser Kragen 60 bildet einen Anschlag für das Rückschlusselement 58, wenn dieses über die Magnetelemente 52 geschoben wird.

Das Rückschlusselement 58 ist an seiner oberen, dem Stator 20 abgewandten Seite in radialer Richtung nach innen verjüngt. Dadurch sind die Magnetelemente 52 zumindest teilweise von der Oberseite her umschlossen, wenn das Rückschlusselement 58 aufgeschoben wurde.

In Fig. 4 ist der Außenläufer-Rotor 22 mit einer Schutzschicht 62 aus Kunststoff dargestellt. Die Schutzschicht 62 ist vorliegend angespritzt und ummantelt sämtliche Magnetelemente 52 und das Rückschlusselement 58. Die Schutzschicht 62 ist dabei so angespritzt, dass sie bündig mit dem Kragen 60 des Antriebsabschnitts 28 abschließt. Damit sind die Magnetelemente 52 und das Rückschlusselement 58 innerhalb einer schützenden Schicht angeordnet und treten nicht in Kontakt mit dem Fluid, welches in den Fluidraum 42 innerhalb des Gehäuses 12 der Pumpe 10 gelangt (vgl. Fig. 1).

Zur Herstellung des Außenläufer-Rotors 22 gemäß der ersten Ausführungsform wird zunächst ein erster Teil 64 des Antriebsabschnittes 28 zusammen mit dem Laufradabschnitt 24 hergestellt. Dann werden die Magnetelemente 52 und das Rückschlusselement 58 an diesem ersten Teil 64 in den daran ausgebildeten Aufnahmestrukturen 54 positioniert. In einem zweiten Schritt wird dann ein zweiter Teil 66 in Form der Schutzschicht 62 an den ersten Teil 64 angespritzt.

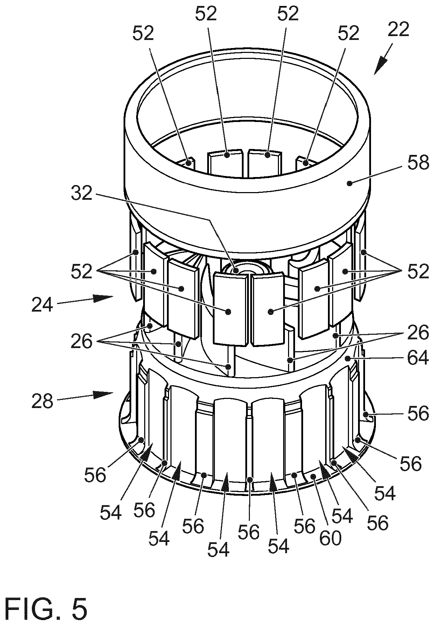

Im Folgenden werden zur Beschreibung einer zweiten Ausführungsform in Verbindung mit Fig. 5 für identische oder zumindest funktionsgleiche Bauteile die gleichen Bezugszeichen verwendet wie zur Beschreibung der ersten Ausführungsform.

In Fig. 5 ist eine zweite Ausführungsform eines Außenläufer-Rotors 22 in einer Darstellung analog zu Fig. 2 gezeigt, d.h. ohne Schutzschicht. Diese zweite Ausführungsform unterscheidet sich von der ersten Ausführungsform im Wesentlichen dadurch, dass die Anzahl der Magnetelemente 52 nicht acht sondern 16 beträgt. Die Magnetelemente 52 sind vorliegend jeweils paarweise gleichmäßig über den Umfang verteilt angeordnet. Dabei weist jeweils ein Paar von Magnetelementen 52, die unmittelbar nebeneinander angeordnet sind, die gleiche Magnetisierung auf. Damit ergibt sich eine wechselweise Anordnung von acht Paaren mit jeweils gleicher Magnetisierung.

Ein Vorteil der Ausführungsform aus Fig. 5 ist, dass die Magnetelemente 52 sich im Vergleich zu der ersten Ausführungsform über einen kleineren Bogenabschnitt des Umfangs des Antriebsabschnitts 28 erstrecken. Aus diesem Grund können ungekrümmte Magnetelemente 52 mit einer quaderförmigen Grundform verwendet werden. Solche Magnetelemente 52 sind kostengünstiger herstellbar bzw. am Markt verfügbar, so dass die Herstellungskosten des Außenläufer-Rotors 22 weiter reduziert werden können.

Der übrige Aufbau des Außenläufer-Rotors 22 in der zweiten Ausführungsform ist identisch bzw. zumindest funktionsgleich wie der Aufbau der ersten Ausführungsform. Aufgrund der doppelten Zahl von Magnetelementen 52 sind dementsprechend sechszehn Aufnahmestrukturen 54 ausgebildet.

Die Erfindung wird ausschließlich von den nachfolgenden Ansprüchen definiert.

### Bezugszeichenliste

- 10: Pumpe
- 12: Gehäuse
- 14: Gehäuseoberteil
- 16: Gehäuseunterteil
- 18: Gehäusedeckel
- 20: Stator
- 22: Außenläufer-Rotor
- 24: Laufradabschnitt
- 26: Laufradschaufel
- 28: Antriebsabschnitt
- 30: Drehachse
- 32: Gleitlagerbuchse
- 34: Durchgangsöffnung
- 36: Anlaufscheibe
- 38: Zuleitung
- 40: Förderleitung
- 42: Fluidraum
- 44: Platine (Elektronik)
- 46: Dichtung
- 48: Eisenkern
- 50: Spule
- 52: Magnetelement
- 54: Aufnahmestruktur
- 56: Steg
- 58: Rückschlusselement
- 60: Kragen
- 62: Schutzschicht
- 64: erster Teil
- 66: zweiter Teil

## Patentansprüche

1. Außenläufer-Rotor einer Pumpe (10) umfassend einen Laufradabschnitt (24) mit mehreren Laufradschaufeln (26) und einen Antriebsabschnitt (28), wobei der Antriebsabschnitt (28) aus einem ersten Teil (64) und einem zweiten Teil (66) gebildet ist, wobei der erste Teil (64) des Antriebsabschnitts (28) zusammen einstückig mit dem Laufradabschnitt (24) hergestellt ist und der zweite Teil (66) des Antriebsabschnittes (28) in Form einer Kunststoff-Schutzschicht (62) an den ersten Teil (64) angespritzt ist, wobei mehrere Magnetelemente (52) über den Umfang des Antriebsabschnitts (28) verteilt derart angeordnet sind, dass der Antriebsabschnitt (28) über den Umfang verteilt mindestens zweipolig magnetisiert ist, wobei die Magnetelemente (52) außenseitig von einem Rückschlusselement (58) umgeben sind, wobei die Magnetelemente (52) sowie das Rückschlusselement (58) in radialer Richtung betrachtet zwischen dem ersten Teil (64) des Antriebsabschnittes (28) und dem zweiten Teil (66) des Antriebsabschnittes (28) positioniert sind und wobei das Rückschlusselement (58) und die Magnetelemente (52) zumindest teilweise derart von der Schutzschicht (62), sprich vom zweiten Teil (66) des Antriebsabschnitts, umschlossen sind, dass die Schutzschicht (62) sämtliche Magnetelemente (52) und das Rückschlusselement (58) ummantelt und sich in einer Längsschnittdarstellung eine die Magnetelemente (52) und das Rückschlusselement (58) vollständig umschließende Anordnung aus dem ersten Teil (64) des Antriebsabschnittes (28) und der Schutzschicht (62) ergibt.

2. Außenläufer-Rotor nach dem vorstehenden Anspruch, **dadurch gekennzeichnet, dass** der Laufradabschnitt (24) und der Antriebsabschnitt (28) einstückig ausgebildet sind.

3. Außenläufer-Rotor nach einem der vorstehenden Ansprüche, **dadurch gekennzeichnet, dass** die Schutzschicht (62) aus einem thermoplastischen Kunststoff und/oder einem Elastomer gebildet ist.

4. Außenläufer-Rotor nach einem der vorstehenden Ansprüche, **dadurch gekennzeichnet, dass** das Rückschlusselement (58) als geschlossenes Ringelement ausgebildet ist.

5. Außenläufer-Rotor nach einem der vorstehenden Ansprüche, **dadurch gekennzeichnet, dass** Aufnahmestrukturen (54) zur formschlüssigen und/oder kraftschlüssigen Aufnahme des mindestens einen Magnetelements (52) an dem Antriebsabschnitt (28) ausgebildet oder angeordnet sind.

6. Pumpe mit einem Außenläufer-Rotor (22) nach einem der Ansprüche 1 bis 5, **dadurch gekennzeichnet, dass** innerhalb des Antriebsabschnitts (28) ein Stator (20) angeordnet ist und der Stator (20) fest mit einer den Laufradabschnitt (24) zumindest teilweise durchsetzenden Drehachse (30) verbunden ist.

7. Verfahren zur Herstellung eines Außenläufer-Rotors (22) nach einem der Ansprüche 1 bis 5, **dadurch gekennzeichnet, dass** in einem ersten Verfahrensschritt der erste Teil (64) des Antriebsabschnittes (28) hergestellt wird, anschließend die Magnetelemente (52) sowie das Rückschlusselement (58) gegenüber dem ersten Teil (64) des Antriebsabschnittes (28) positioniert werden und anschließend der zweite Teil (66) in Form einer Schutzschicht (62) herstellungstechnisch durch Anspritzen an den ersten Teil (64) des Antriebsabschnittes (28) derart gebildet wird, dass die Magnetelemente (52) und das Rückschlusselement (58) vollständig von dem ersten Teil (64) und dem zweiten Teil (66) des Antriebsabschnittes (28) umschlossen sind.

8. Verfahren nach dem vorstehenden Anspruch, **dadurch gekennzeichnet, dass** der Außenläufer-Rotor (22) vor der Herstellung der Schutzschicht (62) ausgewuchtet wird, indem eine massewirksame Bearbeitung des Rückschlusselements (58) durchgeführt wird.

## Claims

1. External-rotor-type rotor of a pump (10), comprising an impeller section (24), with multiple impeller blades (26), and a drive section (28), wherein the drive section (28) is formed from a first part (64) and a second part (66), wherein the first part (64) of the drive section (28) is produced in one piece together with the impeller section (24) and the second part (66) of the drive section (28) is injection-moulded in the form of a plastic protective layer (62) onto the first part (64), wherein multiple magnet elements (52) are arranged distributed over the circumference of the drive section (28) in such a way that the drive section (28) has, distributed over the circumference, at least bipolar magnetization, wherein the magnet elements (52) are surrounded externally by a return-path element (58), wherein, as viewed in the radial direction, the magnet elements (52) and the return-path element (58) are positioned between the first part (64) of the drive section (28) and the second part (66) of the drive section (28), and wherein the return-path element (58) and the magnet elements (52) are, at least in part, surrounded by the protective layer (62), that is to say by the second part (66) of the drive section, in such a way that the protective layer (62) envelops all the magnet elements (52) and the return-path element (58) and, in a longitudinal sectional illustration, an arrangement, comprising the first part (64) of the drive section (28) and the protective layer (62), which completely surrounds the magnet elements (52) and the return-path element (58) is obtained.

2. External-rotor-type rotor according to the preceding claim, **characterized in that** the impeller section (24) and the drive section (28) are formed in one piece.

3. External-rotor-type rotor according to either of the preceding claims, **characterized in that** the protective layer (62) is formed from a thermoplastic material and/or from an elastomer.

4. External-rotor-type rotor according to one of the preceding claims, **characterized in that** the return-path element (58) is in the form of a closed annular element.

5. External-rotor-type rotor according to one of the preceding claims, **characterized in that** receiving structures (54) for receiving the at least one magnet element (52) in a form-fitting and/or forcefitting manner are formed or arranged in the drive section (28).

6. Pump having an external-rotor-type rotor (22) according to one of Claims 1 to 5, **characterized in that** a stator (20) is arranged within the drive section (28), and the stator (20) is connected fixedly to a rotational spindle (30) which passes at least partially through the impeller section (24) .

7. Method for producing an external-rotor-type rotor (22) according to one of Claims 1 to 5, **characterized in that**, in a first method step, the first part (64) of the drive section (28) is produced, then the magnet elements (52) and the return-path element (58) are positioned in relation to the first part (64) of the drive section (28), and then the second part (66), in the form of a protective layer (62), is formed in terms of production by injection moulding onto the first part (64) of the drive section (28) in such a way that the magnet elements (52) and the return-path element (58) are surrounded completely by the first part (64) and the second part (66) of the drive section (28) .

8. Method according to the preceding claim, **characterized in that**, prior to the production of the protective layer (62), the external-rotor-type rotor (22) is balanced **in that** mass-effective modification of the return-path element (58) is carried out.

## Revendications

1. Rotor externe d'une pompe (10) comprenant une section de roue (24) munie de plusieurs aubes de roue (26) et une section d'entraînement (28), la section d'entraînement (28) étant formée d'une première partie (64) et d'une deuxième partie (66), la première partie (64) de la section d'entraînement (28) étant fabriquée conjointement d'un seul tenant avec la section de roue (24) et la deuxième partie (66) de la section d'entraînement (28) étant moulée par injection sur la première partie (64) sous la forme d'une couche de protection en matière plastique (62), plusieurs éléments magnétiques (52) étant agencés sur le pourtour de la section d'entraînement (28) de manière répartie de telle sorte que la section d'entraînement (28) est magnétisée au moins de manière bipolaire de manière répartie sur le pourtour, les éléments magnétiques (52) étant entourés sur le côté externe par un élément de fermeture (58), les éléments magnétiques (52) ainsi que l'élément de fermeture (58) étant positionnés, tels que vus dans la direction radiale, entre la première partie (64) de la section d'entraînement (28) et la deuxième partie (66) de la section d'entraînement (28), et l'élément de fermeture (58) et les éléments magnétiques (52) étant entourés au moins partiellement par la couche de protection (62), c'est-à-dire par la deuxième partie (66) de la section d'entraînement, de telle sorte que la couche de protection (62) enveloppe tous les éléments magnétiques (52) et l'élément de fermeture (58) et qu'il en résulte, dans une représentation en coupe longitudinale, un agencement de la première partie (64) de la section d'entraînement (28) et de la couche de protection (62) entourant entièrement les éléments magnétiques (52) et l'élément de fermeture (58) .

2. Rotor externe selon la revendication précédente, **caractérisé en ce que** la section de roue (24) et la section d'entraînement (28) sont formées d'un seul tenant.

3. Rotor externe selon l'une quelconque des revendications précédentes, **caractérisé en ce que** la couche de protection (62) est formée en une matière plastique thermoplastique et/ou un élastomère.

4. Rotor externe selon l'une quelconque des revendications précédentes, **caractérisé en ce que** l'élément de fermeture (58) est configuré sous forme d'élément annulaire fermé.

5. Rotor externe selon l'une quelconque des revendications précédentes, **caractérisé en ce que** des structures de réception (54) sont formées ou agencées sur la section d'entraînement (28) pour recevoir l'au moins un élément magnétique (52) par complémentarité de forme et/ou par friction.

6. Pompe comprenant un rotor externe (22) selon l'une quelconque des revendications 1 à 5, **caractérisée en ce qu'**un stator (20) est agencé à l'intérieur de la section d'entraînement (28) et le stator (20) est relié de manière fixe à un axe de rotation (30) traversant au moins partiellement la section de roue (24).

7. Procédé de fabrication d'un rotor externe (22) selon l'une quelconque des revendications 1 à 5, **caractérisé en ce que**, dans une première étape de procédé, la première partie (64) de la section d'entraînement (28) est fabriquée, puis les éléments magnétiques (52) ainsi que l'élément de fermeture (58) sont positionnés par rapport à la première partie (64) de la section d'entraînement (28) et puis la deuxième partie (66) est formée sous la forme d'une couche de protection (62) par technique de fabrication par moulage par injection sur la première partie (64) de la section d'entraînement (28) de telle sorte que les éléments magnétiques (52) et l'élément de fermeture (58) sont entièrement entourés par la première partie (64) et la deuxième partie (66) de la section d'entraînement (28).

8. Procédé selon la revendication précédente, **caractérisé en ce que** le rotor externe (22) est équilibré avant la fabrication de la couche de protection (62), en effectuant un usinage de masse de l'élément de fermeture (58).
